# EUROPEAN PATENT APPLICATION

(11) **EP 4 372 256 A1**
(43) Date of publication of application: **22.05.2024**
(21) Application number: 22841379.5
(22) Date of filing: 12.07.2022
(51) Int. Cl.: F16K 15/06, F16K 17/04, F16K 15/02

(54) **ONE-WAY VALVE AND VALVE ISLAND**

(30) Priority: 14.07.2021 CN 202121607681 U
(71) Applicant: Zhejiang Dunan Artificial Environment Co., Ltd., Shaoxing, Zhejiang 311835 (CN)
(72) Inventor: FENG, Zhongbo, Shaoxing, Zhejiang 311835 (CN); JIN, Ju, Shaoxing, Zhejiang 311835 (CN); WANG, Fugang, Shaoxing, Zhejiang 311835 (CN)
(74) Representative: HGF
(86) International application number: PCT/CN2022/105217
(87) International publication number: WO 2023/284744

(57) **Abstract**

A one-way valve and a valve terminal. The one-way valve includes: a plugging portion, which is provided with a flow cavity and a flow port communicating with the flow cavity; a valve body, which is connected with the plugging portion, wherein the valve body is provided with an overflow hole and a valve port communicating with the overflow hole; a piston portion, which includes a piston head, a piston shaft and a limiting cap, which are connected in sequence, wherein the piston shaft passes through the valve body, the limiting cap is located inside the flow cavity, and the piston head is movably disposed to plug or open the valve port; and an elastic member, which is disposed inside the flow cavity, wherein one end of the elastic member abuts against the valve body, and the other end of the elastic member abuts against the limiting cap.

## Description

### Technical Field

The present disclosure relates to the technical field of one-way valves, and in particular to a one-way valve and a valve terminal.

### Background

A plurality of holes need to be formed in some valve terminals when flow channels are processed, while openings of some holes need to be plugged in use. Therefore, one-way valves used in some valve terminals also take into consideration a function of plugging the openings while achieving a one-way conduction function.

In the prior art, for a one-way valve having a plugging function, an integrated valve body is generally used to take into consideration a function of plugging an opening. However, there is a need to install a plurality of parts in a flow cavity of the valve body, such that an assembly operation is only able to be performed at a flow port of the valve body, for example, a snap spring is clamped at an end portion of a piston shaft, which is very inconvenient to assemble.

### Summary

The present disclosure provides a one-way valve and a valve terminal, so as to facilitate the assembly of a one-way valve having a plugging function.

In order to achieve the above purpose, according to one aspect of the present disclosure, provided is a one-way valve, including: a plugging portion, which is provided with a flow cavity and at least one flow port communicating with the flow cavity; a valve body, which is connected with the plugging portion, wherein the valve body is provided with an overflow hole and a valve port communicating with the overflow hole, and the overflow hole communicates with the flow cavity; a piston portion, which includes a piston head, a piston shaft and a limiting cap, which are connected in sequence, wherein the piston shaft passes through the valve body, the piston head is located on a side of the valve body that is away from the flow cavity, the limiting cap is located inside the flow cavity, and the piston head is movably disposed to plug or open the valve port; and an elastic member, which is disposed inside the flow cavity, wherein a first end of the elastic member abuts against the valve body, and a second end of the elastic member abuts against the limiting cap.

Further, the piston head and the piston shaft are of an integrated structure, and the limiting cap is fixedly connected with the piston shaft; or, the limiting cap and the piston shaft are of an integrated structure, and the piston head is fixedly connected with the piston shaft.

Further, the plugging portion is riveted, clamped, or welded with the valve body.

Further, the plugging portion is riveted with the valve body, an outer wall of the valve body is provided with an annular groove, the plugging portion includes a main body and a riveting ring disposed on the main body, the main body is provided with the flow cavity and the flow port, a wall thickness of the riveting ring is less than that of the main body, and an end portion of the riveting ring is clamped into the annular groove through riveting.

Further, the plugging portion further includes a boss, and the boss is disposed on a side of the main body that faces away from the valve body; and there are a plurality of flow ports, and the plurality of flow ports are disposed at intervals in a circumferential direction of the main body.

Further, the plugging portion is clamped with the valve body, wherein the plugging portion is provided with a clamping groove, the valve body is provided with a buckle, and the buckle is clamped into the clamping groove; or, the plugging portion is provided with a buckle, the valve body is provided with a clamping groove, and the buckle is clamped into the clamping groove.

Further, the valve body includes: a cylinder, wherein the overflow hole is located inside the cylinder; a guide sleeve, which is disposed in the overflow hole, wherein the guide sleeve is provided with a guide hole, and the piston shaft movably passes through the guide hole; and a plurality of support beams, wherein two ends of each support beam are respectively connected with the guide sleeve and the cylinder.

Further, the piston head is provided with a first sealing groove, the piston portion further includes a first sealing ring, and the first sealing ring is disposed in the first sealing groove; an outer wall of the valve body is provided with a second sealing groove, the one-way valve further includes a second sealing ring, and the second sealing ring is disposed in the second sealing groove; and an outer wall of the plugging portion is provided with a third sealing groove, the one-way valve further includes a third sealing ring, and the third sealing ring is disposed in the third sealing groove.

According to another aspect of the present disclosure, provided is a valve terminal, the valve terminal includes a valve seat and the above one-way valve, the valve seat is provided with an accommodating cavity, and an input flow channel and an output flow channel, which are disposed at intervals, the input flow channel communicates with the accommodating cavity, the one-way valve is disposed in the accommodating cavity, the accommodating cavity communicates with the flow port of the one-way valve, and the valve port of the one-way valve communicates with the output flow channel in a connectable/disconnectable mode.

Further, the input flow channel and the output flow channel are disposed in parallel, the accommodating cavity is provided with an opening, an inner wall of the opening is provided with a limiting groove, the one-way valve is able to be taken out or installed in the accommodating cavity from the opening, the valve terminal further includes a baffle ring, the baffle ring is detachably clamped into the limiting groove, and the baffle ring is in stop fit with the plugging portion of the one-way valve.

By applying the technical solution of the present disclosure, a one-way valve is provided, the one-way valve includes the plugging portion, the valve body, the piston portion and the elastic member, and the plugging portion is provided with the flow cavity and the flow port communicating with the flow cavity; the valve body is connected with the plugging portion, the valve body is provided with the overflow hole and the valve port communicating with the overflow hole, and the overflow hole communicates with the flow cavity; the piston portion includes the piston head, the piston shaft and the limiting cap, which are connected in sequence, the piston head passes through the valve body, at least portion of the piston head is located outside the valve body, the limiting cap is located inside the flow cavity, and the piston head is movably disposed to plug or open the valve port; and the elastic member is disposed in the flow cavity, one end of the elastic member abuts against the valve body, and the other end of the elastic member abuts against the limiting cap. By using the solution, portions used for plugging redundant openings of the valve terminal are set to be the plugging portion and the valve body, which are independent of each other, and are respectively processed, so that parts such as the piston portion is able to be firstly installed on the valve body, and then the valve body and the plugging portion are connected together, thereby avoiding performing an assembly operation in a narrow flow port, and thus facilitating an assembly of the one-way valve having a plugging function.

### Brief Description of the Drawings

The drawings, which constitute a portion of the present disclosure, are used to provide a further understanding of the present disclosure, and the schematic embodiments of the present disclosure and the description thereof are used to explain the present disclosure, and do not constitute an improper limitation on the present disclosure. In the drawings:
Fig. 1 illustrates a schematic structural diagram of a one-way valve provided in an embodiment of the present disclosure;
Fig. 2 illustrates a schematic structural diagram of a plugging portion in the one-way valve in Fig. 1;
Fig. 3 illustrates a cross-sectional view of the plugging portion in Fig. 2;
Fig. 4 illustrates a schematic diagram of an assembly structure of a valve body and a piston portion in Fig. 1;
Fig. 5 illustrates a schematic structural diagram of a valve terminal provided in another embodiment of the present disclosure; and
Fig. 6 illustrates a cross-sectional view of the valve terminal in Fig. 5 at a position A-A.

The above drawings include the following reference signs:
10. plugging portion; 11. flow cavity; 12. flow port; 13. main body; 14. riveting ring; 15. boss; 20. valve body; 21. overflow hole; 22. valve port; 23. annular groove; 24. cylinder; 25. guide sleeve; 26. guide hole; 30. piston portion; 31.piston head; 32. piston shaft; 33. limiting cap; 40. elastic member; 50. valve seat; 51. accommodating cavity; 52. input flow channel; 53. output flow channel; 54. opening; 55. limiting groove; 60. baffle ring.

### Detailed Description of the Embodiments

A clear and complete description of technical solutions in the embodiments of the present disclosure will be given below, in combination with the drawings in the embodiments of the present disclosure. Apparently, the embodiments described below are merely a part, but not all, of the embodiments of the present disclosure. The following description of at least one exemplary embodiment is merely illustrative in nature and is in no way intended as any limitation on the present disclosure and its disclosure or use. All of other embodiments, obtained by those ordinary skilled in the art based on the embodiments in the present disclosure without any creative effort, fall into the protection scope of the present disclosure.

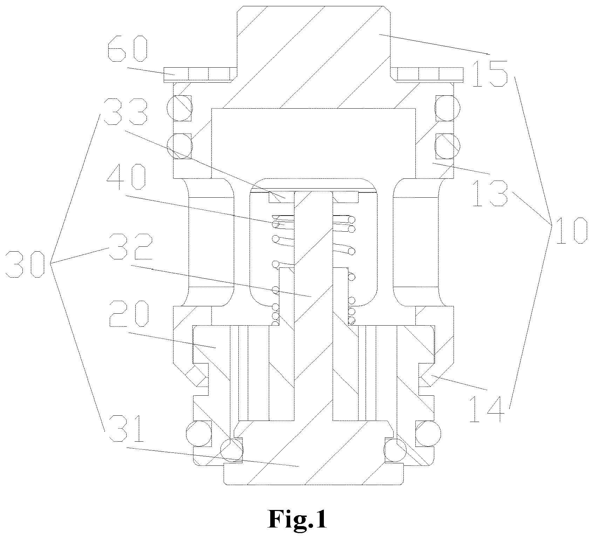

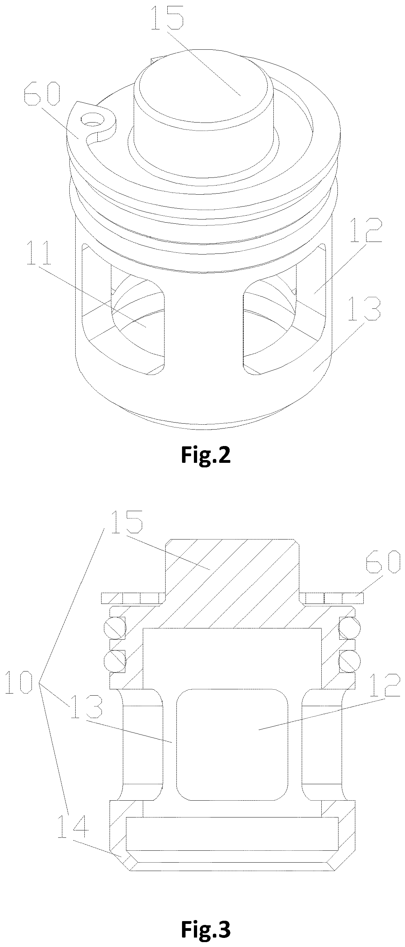

As shown in Fig. 1 to Fig. 4, an embodiment of the present disclosure provides a one-way valve, including: a plugging portion 10, which is provided with a flow cavity 11 and at least one flow port 12 communicating with the flow cavity 11; a valve body 20, which is connected with the plugging portion 10, wherein the valve body 20 is provided with an overflow hole 21 and a valve port 22 communicating with the overflow hole 21, and the overflow hole 21 communicates with the flow cavity 11; a piston portion 30, which includes a piston head 31, a piston shaft 32 and a limiting cap 33, which are connected in sequence, wherein the piston shaft 32 passes through the valve body 20, the piston head 31 is located on a side of the valve body 20 that is away from the flow cavity 11, the limiting cap 33 is located inside the flow cavity 11, and the piston head 31 is movably disposed to plug or open the valve port 22; and an elastic member 40, which is disposed inside the flow cavity 11, wherein a first end of the elastic member 40 abuts against the valve body 20, and a second end of the elastic member 40 abuts against the limiting cap 33.

In the present embodiment, the plugging portion 10 is provided with the flow cavity 11 for enabling fluid to flow, and the flow port 12 communicating with the flow cavity 11, the overflow hole 21 on the valve body 20 communicates with the flow cavity 11, the valve body 20 further includes the valve port 22 communicating with the overflow hole 21, and the flow cavity 11 communicates with the valve port 22 by the overflow hole 21, so as to form a path. The piston shaft 32 of the piston portion 30 passes through the valve body 20 and is disposed in the overflow hole 21 in a penetrating manner, and the piston head 31 is located on the side of the valve body 20 that is away from the flow cavity 11, so that the valve port 22 is sealed by the piston head 31. The elastic member 40 is disposed in the flow cavity 11, the first end of the elastic member abuts against the valve body 20, and the second end of the elastic member abuts against the limiting cap 33. By an action of the elastic member 40 and the fluid, the piston head 31 moves to plug or open the valve port 22, so that an inside of the one-way valve is connected with or disconnected from an external flow channel by the valve port 22.

By using the solution, portions used for plugging redundant openings of a valve terminal are set to be the plugging portion 10 and the valve body 20, which are independent of each other, and are respectively processed, so that parts such as the piston portion 30 is able to be firstly installed on the valve body 20, and then the valve body 20 and the plugging portion 10 are connected together, thereby avoiding performing an assembly operation in a narrow flow port 12, and thus facilitating an assembly of the one-way valve having a plugging function.

In some embodiments, at least a part of the piston head 31 is located outside the valve body 20. In this way, a decrease in the sealing capacity is able to be avoided due to that the portion of the piston head 31 used for plugging the valve port 22 is excessively squeezed, thereby improving the strength of the portion and ensuring the sealing capacity of the piston head 31.

In some embodiments, in a radial direction of the piston shaft 32, a size of the limiting cap 33 is greater than that of the piston shaft 32, so that the elastic member 40 is able to conveniently abut against the limiting cap 33, an end of the piston portion 30 that is close to the limiting cap 33 is limited, and thus the movement of the entire piston portion 30 is controlled by the limiting cap 33 connected with the piston shaft 32.

In some embodiments, an orientation of the valve port 22 is perpendicular to an orientation of the flow port 12, and a fluid perpendicularly flows into the valve port 22 after entering the flow port 12 to form a path. In this way, a fluid reversing requirement under some working conditions is able to be met.

In some embodiments, the piston head 31 and the piston shaft 32 are of an integrated structure, and the limiting cap 33 is fixedly connected with the piston shaft 32; or, in another embodiment not shown in the figures, the limiting cap 33 and the piston shaft 32 are of an integrated structure, and the piston head 31 is fixedly connected with the piston shaft 32.

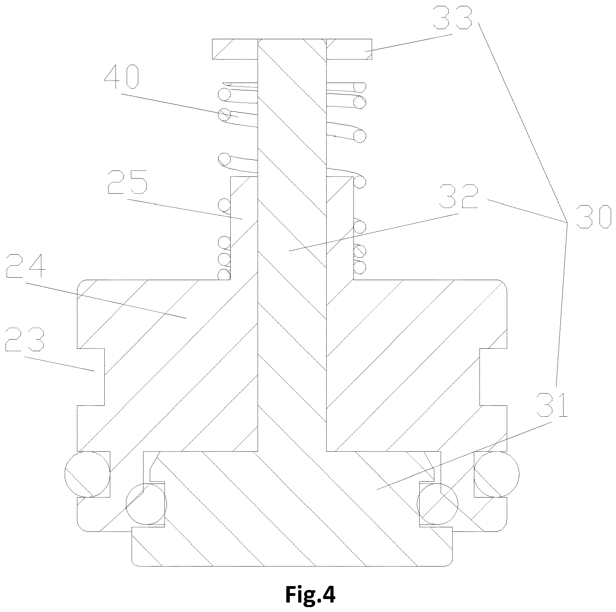

As shown in Fig. 1 and Fig. 4, the piston head 31 and the piston shaft 32 are made into an integrated structure, thereby being simple to process and convenient to use. Then, the limiting cap 33 is fixedly connected with the piston shaft 32, so that the piston head 31, the piston shaft 32 and the limiting cap 33 are connected into an entirety. In this way, a connection between the limiting cap 33 and the piston shaft 32 is reliable, and the strength is high. Therefore, compared with a mode in which a snap spring is used, fall or deformation is unlikely to occur.

In some embodiments, a fixed connection is divided into a plurality of modes, including welding, interference fit and the like. The welding fixed connection mode is more stable in connection, and does not require the cooperation of other accessories.

In some embodiments, the plugging portion 10 is riveted, clamped, or welded with the valve body 20. The valve body 20 and the plugging portion 10 are connected and then are placed in the valve terminal as a whole, so that an assembly or disassembly is more convenient, and an overall structure of the one-way valve is also more stable and reliable.

As shown in Fig. 1, the plugging portion 10 is riveted with the valve body 20, an outer wall of the valve body 20 is provided with an annular groove 23, the plugging portion 10 includes a main body 13 and a riveting ring 14 disposed on the main body 13, the main body 13 is provided with the flow cavity 11 and the flow port 12, a wall thickness of the riveting ring 14 is less than that of the main body 13, and an end portion of the riveting ring 14 is clamped into the annular groove 23 through riveting.

In the present embodiment, the end portion of the riveting ring 14 is clamped into the annular groove 23 through riveting, the end portion of the riveting ring 14 is first moved to the position of the annular groove 23, and then the end portion of the riveting ring 14 is radially contracted by using a tool, so as to abut against an inner wall of the annular groove 23 to realize riveting, so that the valve body 20 and the plugging portion 10 are connected into an entirety. The flow cavity 11 and the flow port 12 are disposed on the main body 13 in the plugging portion 10 for communicating the flow channel and the flow cavity 11, so as to ensure smooth flow of the fluid.

In some embodiments, an end face of the main body 13 abuts against an end face of the valve body 20. In this way, the plugging portion 10 where the valve body 20 and the main body 13 are located is able to be further limited in an axial direction, thereby improving the structural stability.

As shown in Fig. 1 to Fig. 3, the plugging portion 10 further includes a boss 15, and the boss 15 is disposed on a side of the main body 13 that faces away from the valve body 20; and there are a plurality of flow ports 12, and the plurality of flow ports 12 are disposed at intervals in a circumferential direction of the main body 13. An upper end of the plugging portion 10 is provided with the boss 15, when the plugging portion 10 is mounted or dismounted, the boss 15 may be held in a hand or the boss 15 is matched with an accessory for operation, so as to place the entire one-way valve into an opening 54 or take out same from the opening 54 more conveniently. The plurality of flow ports 12 on the main body 13 are disposed at intervals in the circumferential direction, so as to prevent the situation that the flow ports 12 cannot communicate with the flow channel caused by that the flow ports 12 are misplaced during a placement process due to a sealed and invisible structure. By providing the plurality of flow ports 12, during the process of disposing the one-way valve in the valve terminal, when the one-way valve is rotated by any angle in the circumferential direction for placement, it is able to be ensured that the flow ports 12 communicate with the flow channel.

In some embodiments, the valve body 20 includes: a cylinder 24, wherein the overflow hole 21 is located inside the cylinder 24; a guide sleeve 25, which is disposed in the overflow hole 21, wherein the guide sleeve 25 is provided with a guide hole 26, and the piston shaft 32 movably passes through the guide hole 26; and a plurality of support beams, wherein two ends of each support beam are respectively connected with the guide sleeve 25 and the cylinder 24.

In the present embodiment, the valve body 20 includes the cylinder 24, the guide sleeve 25 and the plurality of support beams, the two ends of the plurality of support beams are respectively connected with the guide sleeve 25 and the cylinder 24, thereby ensuring the stability of the overall structure; and moreover, the position of the guide sleeve 25 may be fixed, and the guide sleeve 25 is provided with the guide hole 26 for passing through the piston shaft 32, thereby guiding the piston shaft 32, and preventing the piston shaft 32 from inclining to cause the piston part 30 to incline.

In some embodiments, the piston head 31 is provided with a first sealing groove, the piston portion 30 further includes a first sealing ring, and the first sealing ring is disposed in the first sealing groove; an outer wall of the valve body 20 is provided with a second sealing groove, the one-way valve further includes a second sealing ring, and the second sealing ring is disposed in the second sealing groove; and an outer wall of the plugging portion 10 is provided with a third sealing groove, the one-way valve further includes a third sealing ring, and the third sealing ring is disposed in the third sealing groove. By providing a plurality of sealing grooves, the sealing performance of the one-way valve is able to be ensured to avoid the leakage of the fluid.

In another embodiment provided in the present disclosure, which is not shown in the figures, different from the above embodiment, the plugging portion 10 is clamped with the valve body 20, wherein the plugging portion 10 is provided with a clamping groove, the valve body 20 is provided with a buckle, and the buckle is clamped into the clamping groove; or, the plugging portion 10 is provided with a buckle, the valve body 20 is provided with a clamping groove, and the buckle is clamped into the clamping groove. In the present embodiment, the clamping groove is formed in the plugging portion 10, and the buckle is disposed on the valve body 20; or, the clamping groove is formed in the valve body 20, the buckle is disposed on the plugging portion 10, and the valve body 20 and the plugging portion 10 are fixed together by a snap fit of the clamping groove and the buckle, so as to form an entirety, thereby improving the reliability of the overall connection.

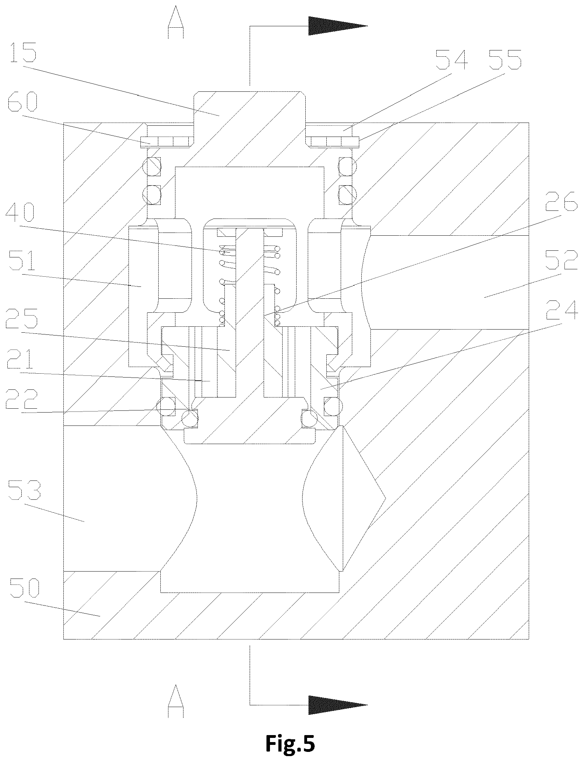

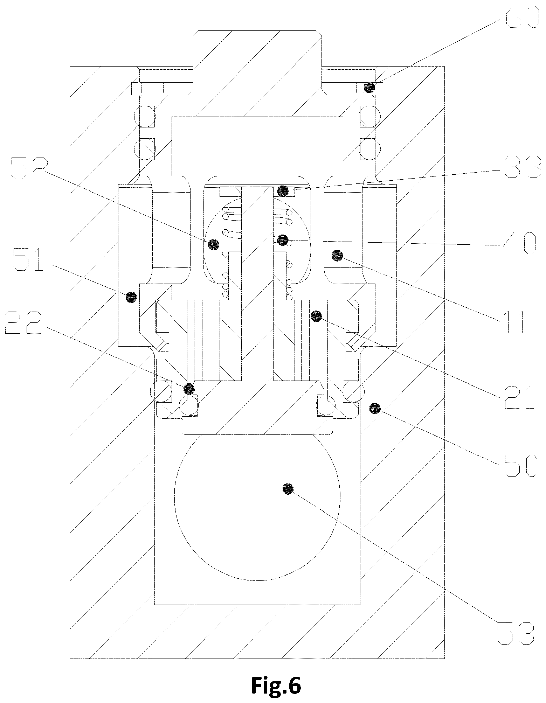

As shown in Fig. 5 and Fig. 6, according to a yet another embodiment provided in the present disclosure, provided is a valve terminal, the valve terminal includes a valve seat 50 and the above one-way valve, the valve seat 50 is provided with an accommodating cavity 51, and an input flow channel 52 and an output flow channel 53, which are disposed at intervals, the input flow channel 52 communicates with the accommodating cavity 51, the one-way valve is disposed in the accommodating cavity 51, the accommodating cavity 51 communicates with the flow port 12 of the one-way valve, and the valve port 12 of the one-way valve communicates with the output flow channel 53 in a connectable/disconnectable mode.

In the present embodiment, the valve seat 50 is internally provided with the accommodating cavity 51, the one-way valve is disposed in the accommodating cavity 51, the valve seat 50 is further provided with the input flow channel 52 and the output flow channel 53, which are disposed at intervals and communicate with the accommodating cavity 51, the valve port 22 of the one-way valve communicates with the output flow channel 53 in the connectable/disconnectable mode, and the flow port 12 communicates with the accommodating cavity 51 to form a flow channel path. The fluid flows in and sequentially passes through the input flow channel 52, the accommodating cavity 51, the flow port 12, the flow cavity 11, the overflow hole 21, the valve port 22 and the output flow channel 53.

During inflow, the fluid first flows through the input flow channel 52, at this time, the one-way valve is in a closed state, the fluid enters the accommodating cavity 51 and flows into the flow cavity 11 through the plurality of flow ports 12 on a side surface of the main body 13, the fluid continues to flow downwards to enter the overflow hole 21, so as to push the piston head 31 to move downwards, the elastic member 40 contracts to open the valve port 22, so that the one-way valve is in an avoidance state, and the fluid flows into the output flow channel 53 from the valve port 22, so as to form a path; and when the pressure of the fluid is decreased, the elastic member 40 in a contracted state is stretched and unfolded to pull the piston head 31 abutting against the elastic member 40 to move upwards, so as to close the valve port 22, so that the one-way valve is in the closed state, and after the fluid flows into the input flow channel 52, a path cannot be formed since the valve port 22 is closed, and accordingly the flow channel of the fluid is plugged.

In some embodiments, the input flow channel 52 and the output flow channel 53 are disposed in parallel, the accommodating cavity 51 is provided with an opening 54, an inner wall of the opening 54 is provided with a limiting groove 55, the one-way valve may be taken out or installed in the accommodating cavity 51 from the opening 54, the valve terminal further includes a baffle ring 60, the baffle ring 60 is detachably clamped into the limiting groove 55, and the baffle ring 60 is in stop fit with the plugging portion 10 of the one-way valve. In the present embodiment, the accommodating cavity 51 is provided with the opening 54, which is formed in an upper end of the accommodating cavity 51 and is used for assembling the one-way valve. In this way, the processing of the flow channels and the installation and removal of the one-way valve are facilitated. Meanwhile, the one-way valve extends into the accommodating cavity 51 from the opening 54 to plug the opening 54, so that a flow direction of the fluid inside the valve terminal is not affected. The valve terminal further includes the baffle ring 60, the baffle ring 60 is detachably clamped into the limiting groove 55 on the inner wall of the opening 54, and the baffle ring 60 is in stop fit with the plugging portion 10, thereby preventing the one-way valve from moving up and down due to an excessive fluid impact of the input flow channel 52 during a working process of the valve terminal.

The above descriptions are only some embodiments of the present disclosure, and are not intended to limit the present disclosure. For those skilled in the art, the present disclosure may have various modifications and changes. Any modifications, equivalent replacements, improvements and the like, made within the spirit and principles of the present disclosure, shall be included within the protection scope of the present disclosure.

## Claims

1. A one-way valve, comprising:
a plugging portion (10), which is provided with a flow cavity (11) and at least one flow port (12) communicating with the flow cavity (11);
a valve body (20), which is connected with the plugging portion (10), wherein the valve body (20) is provided with an overflow hole (21) and a valve port (22) communicating with the overflow hole (21), and the overflow hole (21) communicates with the flow cavity (11);
a piston portion (30), which comprises a piston head (31), a piston shaft (32) and a limiting cap (33), which are connected in sequence, wherein the piston shaft (32) passes through the valve body (20), the piston head (31) is located on a side of the valve body (20) that is away from the flow cavity (11), the limiting cap (33) is located inside the flow cavity (11), and the piston head (31) is movably disposed to plug or open the valve port (22); and
an elastic member (40), which is disposed inside the flow cavity (11), wherein a first end of the elastic member (40) abuts against the valve body (20), and a second end of the elastic member (40) abuts against the limiting cap (33).

2. The one-way valve according to claim 1, wherein,
the piston head (31) and the piston shaft (32) are of an integrated structure, and the limiting cap (33) is fixedly connected with the piston shaft (32); or,
the limiting cap (33) and the piston shaft (32) are of an integrated structure, and the piston head (31) is fixedly connected with the piston shaft (32).

3. The one-way valve according to claim 1, wherein the plugging portion (10) is riveted, clamped, or welded with the valve body (20).

4. The one-way valve according to claim 3, wherein the plugging portion (10) is riveted with the valve body (20), an outer wall of the valve body (20) is provided with an annular groove (23), the plugging portion (10) comprises a main body (13) and a riveting ring (14) disposed on the main body (13), the main body (13) is provided with the flow cavity (11) and the flow port (12), a wall thickness of the riveting ring (14) is less than a wall thickness of the main body (13), and an end portion of the riveting ring (14) is clamped into the annular groove (23) through riveting.

5. The one-way valve according to claim 4, wherein the plugging portion (10) further comprises a boss (50), and the boss (50) is disposed on a side of the main body (13) that is away from the valve body (20); and there are a plurality of flow ports (12), and the plurality of flow ports (12) are disposed at intervals in a circumferential direction of the main body (13).

6. The one-way valve according to claim 1, wherein the plugging portion (10) is clamped with the valve body (20);
the plugging portion (10) is provided with a clamping groove, the valve body (20) is provided with a buckle, and the buckle is clamped into the clamping groove; or,
the plugging portion (10) is provided with a buckle, the valve body (20) is provided with a clamping groove, and the buckle is clamped into the clamping groove.

7. The one-way valve according to claim 1, wherein the valve body (20) comprises:
a cylinder (24), the overflow hole (21) being located inside the cylinder (24);
a guide sleeve (25), which is disposed in the overflow hole (21), the guide sleeve (25) being provided with a guide hole, and the piston shaft (32) movably passing through the guide hole; and
a plurality of support beams, two ends of each support beam being respectively connected with the guide sleeve (25) and the cylinder (24).

8. The one-way valve according to claim 1, wherein,
the piston head (31) is provided with a first sealing groove, the piston portion (30) further comprises a first sealing ring, and the first sealing ring is disposed in the first sealing groove;
an outer wall of the valve body (20) is provided with a second sealing groove, the one-way valve further comprises a second sealing ring, and the second sealing ring is disposed in the second sealing groove; and
an outer wall of the plugging portion (10) is provided with a third sealing groove, the one-way valve further comprises a third sealing ring, and the third sealing ring is disposed in the third sealing groove.

9. A valve terminal, wherein the valve terminal comprises a valve seat (50) and the one-way valve according to any one of claims 1-8, the valve seat (50) is provided with an accommodating cavity (51), and an input flow channel (52) and an output flow channel (53), which are disposed at intervals, the input flow channel (52) communicates with the accommodating cavity (51), the one-way valve is disposed in the accommodating cavity (51), the accommodating cavity (51) communicates with the flow port (12) of the one-way valve, and the valve port (22) of the one-way valve communicates with the output flow channel (53) in a connectable/disconnectable mode.

10. The valve terminal according to claim 9, wherein the input flow channel (52) and the output flow channel (53) are disposed in parallel, the accommodating cavity (51) is provided with an opening (54), an inner wall of the opening (54) is provided with a limiting groove (55), the one-way valve is able to be taken out or installed in the accommodating cavity (51) from the opening (54), the valve terminal further comprises a baffle ring (60), the baffle ring (60) is detachably clamped into the limiting groove (55), and the baffle ring (60) is in stop fit with the plugging portion (10) of the one-way valve.
